# EUROPEAN PATENT APPLICATION

(11) **EP 2 713 522 A1**
(43) Date of publication of application: **02.04.2014**
(21) Application number: 13183399.8
(22) Date of filing: 06.09.2013
(51) Int. Cl.: H04B 1/10

(54) **Digital post-distortion compensation in telecommunication systems**

(30) Priority: 06.09.2012 US 201261697568 P
(71) Applicant: Andrew LLC, Hickory, NC 28602 (US)
(72) Inventor: Braz, Oliver, 86653 Monheim (DE); Mederle, Markus, 86660 Tapfheim (DE); Hanson Van E., 24551 Forest, VA (US); Schmidt, Nelson Christian, Jr., 24450 Lesington, VA (US)
(74) Representative: Tanner, Andreas

(57) **Abstract**

Systems and methods are provided for compensating for analog distortion in telecommunication systems. In one aspect, a system is provided for communicating signals having frequencies in multiple frequency bands between at least one base station and at least one terminal device. The system includes a transport section, a digital filter, and a processing device. The transport section includes an analog filter. The analog filter can reduce interference from interfering signals having frequencies in frequency bands adjacent to received signals from an antenna by filtering the received signals. The processing device can modify filter coefficients of the digital filter. The digital filter with the modified filter coefficients can compensate for distortion in the received signals caused by the analog filter.

## Description

### Cross-Reference to Related Applications

Claim of priority is made to U.S. Provisional Application Serial No. 61/697,568, filed September 6, 2012 and titled "Digital Post-Distortion Compensation in Telecommunication Systems," the contents of which are hereby incorporated by reference.

### Technical Field

This disclosure relates generally to telecommunications and more particularly (although not necessarily exclusively) to compensating for distortion in telecommunication systems.

### Background

In several telecommunications technologies, a filter may be used to remove narrow-band carrier interference. For example, a notch filter can be used at 880 MHz in the GSM-R/E-GSM uplink frequency band or at 824 MHz in the US800/US850 uplink frequency bands. Using a filter with sharp edges (such as, but not limited to, a notch filter) can generate undesirable distortion in adjacent broadband carriers, such as (but not limited to) UMTS900 or CDMA 850.

Various co-existence scenarios can exist for different communication standards in the same or adjacent frequency bands. Co-existence studies have shown that narrow-band signals can cause interference in broadband base stations, user equipment receivers, or a combination of these. If adjacent narrow-band uplink power control is not activated, all narrow-band terminal devices or other user equipment within a cell may transmit at maximum power.

The impact on broadband uplink capacity loss due to interference from narrow-band terminal devices can be more severe when broadband sites are located near terminal devices, such as when narrow-band terminal devices mounted on trains transmit signals and thereby cause interference at broadband sites located near a track on which a train travels. Broadband operators may address this problem by using site-engineering solutions to reduce the interference issue.

Interference can increase if a repeater with insufficient frequency selectivity amplifies both signals or if a repeater uplink input is blocked by a narrow-band signal. For example, a required coupling can be achieved by physically separating the uplink receiver from the nearest narrow-band terminal devices by at least 300 meters.

It is desirable to reduce interference or other distortion introduced by narrow-band filters.

### Summary

Certain aspects and features of the present invention are directed to telecommunication systems using digital post-distortion compensation.

In one aspect, a system is provided for communicating signals having frequencies in multiple frequency bands between a base station and a terminal device. The system can include a transport section, a digital filter, and a processing device. The transport section can include an analog filter. The analog filter can reduce interference from interfering signals having frequencies in frequency bands adjacent to received signals from an antenna by filtering the received signals. The processing device can modify filter coefficients of the digital filter. The digital filter with the modified filter coefficients can compensate for distortion in the received signals caused by the analog filter.

In another aspect, method is provided for communicating signals having frequencies in multiple frequency bands between a base station and a terminal device. The method involves receiving signals via an antenna of a transport section. The method also involves filtering the received signals with an analog filter to reduce interference from interfering signals having frequencies in frequency bands adjacent to the received signals. The method also involves modifying filter coefficients of a digital filter in a signal path with the analog filter. The method also involves the digital filter compensating for distortion in the received signals caused by the analog filter.

In another aspect, a distributed antenna system is provided. The distributed antenna system includes a master unit and a remote unit. The master unit can communicate uplink signals to a base station. The remote unit can communicate the uplink signals received from a terminal device to the master unit. The remote unit can include a transport section, a digital filter, and a processing device. The transport section includes an analog filter that can reduce interference from interfering signals having frequencies in frequency bands adjacent to the uplink signals. The digital filter can be in an uplink signal path with the analog filter. The processing device can modify filter coefficients of the digital filter. The digital filter with modified filter coefficients can compensate for distortion in the uplink signals caused by the analog filter.

These illustrative aspects and features are mentioned not to limit or define the invention, but to provide examples to aid understanding of the concepts disclosed in this application. Other aspects, advantages, and features of the present invention will become apparent after review of the entire application.

### Brief Description of the Drawings

FIG. 1 is a block diagram of an example of a telecommunication device configured to perform digital post-distortion compensation according to one aspect.

FIG. 2 is a block diagram of an example of a repeater configured to perform digital post-distortion compensation according to one aspect.

FIG. 3 is a schematic diagram of an example of a repeater configured to perform digital post-distortion compensation according to one aspect.

FIG. 4 is a block diagram of an example of a distributed antenna system according to one aspect.

FIG. 5 is a schematic diagram of a remote unit of a distributed antenna system that is configured to perform digital post-distortion compensation to according to one aspect.

FIG. 6 is a schematic diagram of a master unit configured to communicate signals between one or more base stations and one or more remote units depicted in FIG. 5 to according to one aspect.

FIG. 7 is a graph of examples of an amplitude response and a group delay distortion introduced by a steep notch filter according to one aspect.

FIG. 8 is a graph of an example of a relationship between the error vector magnitude ("EVM") and group delay according to one aspect.

FIG. 9 is a graph comparing an example of an un-corrected group delay and an ideal compensation group delay according to one aspect.

FIG. 10 is graph comparing examples of an un-corrected group delay and a compensated group delay using an all-pass filter according to one aspect.

FIG. 11 is a graph of an example of an expected compensation temperature behavior according to one aspect.

### Detailed Description

Certain aspects and examples are directed to digitally compensating for distortion in a telecommunication device, such as (but not limited to) a repeater, that can communicate signals in multiple frequency bands. For example, a repeater that compensates for digital distortion can include a transport section and a digital filter. The transport section can communicate signals having frequencies in multiple frequency bands between a base station and mobile devices. The transport section can include an external filter that can filter received signals to prevent blocking from signals in adjacent frequency bands. The digital filter can be configured with filter coefficients that are selected to compensate for distortion of the signals introduced by the external filter. Non-limiting examples of a digital filter include an infinite impulse response filters, a finite impulse response filters, and the like.

In some aspects, a repeater or other telecommunication device can include an analyzer module for performing digital post-distortion compensation. The analyzer module can analyze scattering parameters of received signals to determine the amount of distortion in the signals. The scattering parameters can be used for received signals in which the characteristics of a distorting signal or distorting signal components are unknown. The analyzer module can determine the filter coefficients based on analyzing the scattering parameters and configure the digital filter with the filter coefficients. In some aspects, the analyzer module can include or be communicatively coupled to a measurement receiver that can perform distortion measurements for the external filter via a directional coupler.

In additional or alternative aspects, the analyzer module can determine the distortion by analyzing a test signal or a test sequence. In some aspects, the test signal or test sequence can be provided by a dedicated test signal generator. In other aspects, a test sequence can be included in pilot carriers or a pilot sequence of a signal received by the telecommunication device.

Digital post-distortion compensation can be used to avoid distortion resulting from multiple received frequency bands being close together (e.g., adjacent frequency bands). In telecommunications systems that include two or more devices using multiple frequency bands that are closely spaced together in the frequency domain, signals communicated via the respective frequency bands can be isolated from each other by physically separating the two or more telecommunication devices at a sufficient distance. Failing to isolate sufficiently the signals communicated via the respective frequency bands, such as adjacent or other closely spaced frequency bands, can introduce signal path loss or other distortion in signals communicated via telecommunication devices. A telecommunication device such as a repeater may not be able to use physical separation of antennas to isolate signals using closely spaced frequency bands. A digital filter can be configured via software to modify filter characteristics and thereby compensate for or otherwise mitigate distortion. Using a digital filter can thus allow distortion to be reduced without physically separating antennas in a telecommunication device.

Detailed descriptions of certain aspects are discussed below. These illustrative examples are given to introduce the reader to the general subject matter discussed here and are not intended to limit the scope of the disclosed concepts. The following sections describe various additional aspects and examples with reference to the drawings in which like numerals indicate like elements, and directional descriptions are used to describe the illustrative aspects but, like the illustrative aspects, should not be used to limit the present invention.

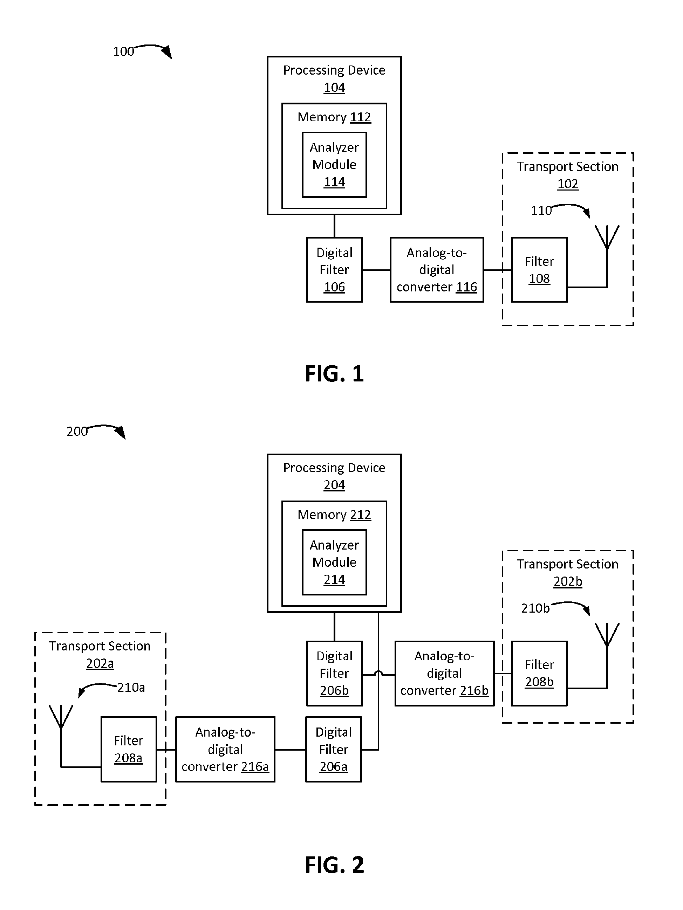

FIG. 1 is a block diagram of an example of a telecommunication device 100 configured to perform digital post-distortion compensation according to one aspect. The telecommunication device 100 can include a transport section 102, a processing device 104, and a digital filter 106.

The transport section 102 can communicate signals having frequencies in multiple frequency bands between a base station and one or more terminal devices. The transport section 102 can include a filter 108 and an antenna 110. The filter 108 can be an analog filter. The filter 108 can filter signals received via the antenna 110 to prevent interfering signals in adjacent frequency bands from interfering with signals received via the antenna 110.

The processing device 104 can execute code stored on a computer-readable medium, such as a memory 112, to cause the processing device 104 to determine filter coefficients for the digital filter 106. Examples of processing device 104 include a microprocessor, an application-specific integrated circuit ("ASIC"), a field-programmable gate array ("FPGA"), or other suitable processor. The processing device 104 may include one processor or any number of processors.

The processing device 104 can include, be interfaced with, or otherwise be communicatively coupled to a memory 112. The memory 112 may be any non-transitory computer-readable medium capable of tangibly embodying code and can include electronic, magnetic, or optical devices. Examples of memory 112 include random access memory ("RAM"), read-only memory ("ROM"), magnetic disk, an ASIC, a configured processor, or other storage device. Although Figure 1 depicts the memory 112 as included in the processing device 104, the memory 112 can additionally or alternatively be accessed from a remote location or device by the processing device 104. Instructions can be stored in memory 112 as executable code. The instructions can include processor-specific instructions generated by a compiler or an interpreter from code written in any suitable computer-programming language, such as C, C++, C#, Visual Basic, Java, Python, Perl, JavaScript, and ActionScript.

Instructions stored in the memory 112 can include an analyzer module 114. The processing device 104 can execute the analyzer module 114 to cause the processing device 104 to analyze complex scattering parameters or other scattering parameters of the signals to determine the amount of distortion in signals received via the antenna 110. The analyzer module 114 can determine filter coefficients for the digital filter 106 based on analyzing one or more scattering parameters. The scattering parameter(s) can be analyzed based on one or more measured parameters or one or more predetermined parameters provided to the analyzer module 114. The analyzer module 114 can select or otherwise determine filter coefficients that compensate for distortion of the signals. The processing device 104 can configure the digital filter 106 with the filter coefficients determined by the analyzer module 114.

The digital filter 106 can filter digital signals outputted by an analog-to-digital converter 116. The digital filter 106 can be configured with filter coefficients that are selected to compensate for distortion of the signals. The digital filter 106 can filter downlink signals or uplink signals on a band-selective or carrier-selective basis. In some aspects, the digital filter 106 can be a symmetrical non-recursive finite impulse response ("FIR") filter. Using symmetrical non-recursive FIR can reduce or eliminate additional distortion introduced by filtering the uplink or downlink signals. The selectivity of the digital filter 106 can be increased by increasing the number of digital filter taps implemented. Each additional tap may introduce an additional signal delay. The additional signal delay may be minimized. In other aspects, the digital filter 106 can be an infinite impulse response ("IIR") filter. An IIR can compensate for a non-linear group delay variation introduced by an RF component in a signal path of the telecommunication device 100. A trade-off between a lower delay and the potential of an IIR filter may be used to determine whether an IIR filter is used. In additional or alternative aspects, an asymmetric FIR filter can be used for non-critical filter poles.

The telecommunication device 100 can adapt to different frequency bands by using the analyzer module 114 to modify filter coefficients of a digital filter in the repeater. For example, the telecommunication device 100 can utilize post-distortion compensation to compensate for additional group delay. A maximum order of a compensating all-pass-filter can be determined based on an amount of acceptable additional delay. Within an optimization process, additional poles and zeros can be shifted in the complex z-plane until an overall group delay curve is sufficiently flat. A pole can be compensated by a zero and vice versa.

The analyzer module 114 can analyze scattering parameters of a signal received by the telecommunication device 100 to determine an amount of distortion in the signal. In additional or alternative aspects, predetermined parameters or other characteristics of a distorting signal or signal component can be provided as inputs to the telecommunication device 100. Examples of scattering parameters can include the transmission coefficient, the amplitude, and the phase of signals received by the telecommunication device 100 or other telecommunication device. Error vector magnitude or modulation error ratio can also be measured to determine the amount of distortion.

In one non-limiting example, a signal that is digitally modulated can be received and decoded by an analyzer module 114. The decoded signal can be re-encoded to produce a reference signal. The analyzer module 114 can compare the reference signal with the received signal. Signal processing de-convolution algorithms can be used to estimate or otherwise determine a transfer function that can generate the received signal when applied to the reference signal. The coefficients of the digital filter 106 can be selected to approximate the inverse transfer function.

In another non-limiting example, frequency dependent transfer coefficients *S₂₁* or *S₁₂* can be determined by injecting a swept pilot tone into a receive signal path. For delay compensation, the analyzer module can determine the *S₂₁* or *S₁₂* phase information or their group delay (delta (angle (*S₂₁*))/delta (f) or delta (angle (*S₁₂*))/delta (f)).

In some aspects, the analyzer module 114 can determine that distortion exists by comparing a test signal to a model signal. In other aspects, the analyzer module 114 can determine that distortion exists by comparing changes in signal parameters within the test signal. The analyzer module 114 can identify filter coefficients sufficient to compensate for distortion in the filter based on the scattering parameters.

For example, a signal received by the telecommunication device 100 may have a linear progression. A sharp edged filter 108 may introduce distortions that deform the received signal in such a manner that the signal cannot be decoded. The telecommunication device 100 can modify the signal such that, for example, the phase of the signal has a corrected linear progression. The telecommunication device 100 can transmit the corrected signal to a terminal device or other telecommunication device.

In additional or alternative aspects, the distortion characteristics to be compensated can be characterized prior to deployment of the telecommunication device 100. The filter coefficients for a digital filter 106 can be determined and up-loaded during the configuration of a telecommunication device 100. In additional or alternative aspects, a pilot tone, a carrier signal, or pilot sequences using a frequency band of interest can be provided to the telecommunication device 100 to allow the analyzer module 114 to measure the distortion and calculate the required coefficients inside the telecommunication device 100.

In some aspects, a telecommunication device can receive signals from multiple sources. For example, FIG. 2 is a block diagram of an example of a repeater 200 configured to perform digital post-distortion compensation according to one aspect. The repeater 200 can include transport sections 202a, 202b, a processing device 204, and digital filters 206a, 206b.

The transport sections 202a, 202b can communicate signals having frequencies in multiple frequency bands between one or more base stations and one or more terminal devices. On a donor side, a transport section 202a can include a filter 208a and an antenna 210a for transmitting and receiving signals from one or more base stations. A donor side can include devices, components, or some combination thereof used for communication of signals to and from one or more base stations. The filter 208a on the donor side can be positioned external to the repeater 200. In some aspects, the filter 208a can be connected to the antenna 210a and the repeater 200 with an RF connection cable. The filter 208a on the donor side can filter downlink signals received from one or more base stations via the antenna 210a to prevent blocking from adjacent band signals on the donor side. Blocking can also occur on the coverage side. On a coverage side, a transport section 202b can include a filter 208b and an antenna 210b for transmitting and receiving signals from one or more terminal devices. A coverage side can include devices, components, or some combination thereof used for communication of signals to and from one or more terminal devices. The filter 208b on the coverage side can filter uplink signals received from one or more terminal devices via the antenna 210b to prevent interference from signals in adjacent frequency bands on the coverage side.

The processing device 204 can execute an analyzer module 214 stored in a memory 212, as described above with respect to the processing device 104 and analyzer module 114 depicted in FIG. 1. The memory 212 may be any non-transitory computer-readable medium capable of tangibly embodying code and can include electronic, magnetic, or optical devices.

The digital filter 206a can reduce, remove, or otherwise compensate for distortion of signals received on the donor side from one or more base stations. The digital filter 206a can be configured with filter coefficients that are selected to compensate for the distortion of signals received on the donor side. The digital filter 206b can reduce, remove, or otherwise compensate for distortion of signals received on the coverage side from one or more terminal devices. The digital filter 206b can be configured with filter coefficients that are selected to compensate for distortion of signals received on the coverage side.

The digital filters 206a, 206b can respectively filter digital signals outputted by analog-to-digital converters 216a, 216b. In some aspects, the digital filters 206a, 206b can be symmetrical non-recursive FIR filters. In other aspects, the digital filters 206a, 206b can be IIR filters.

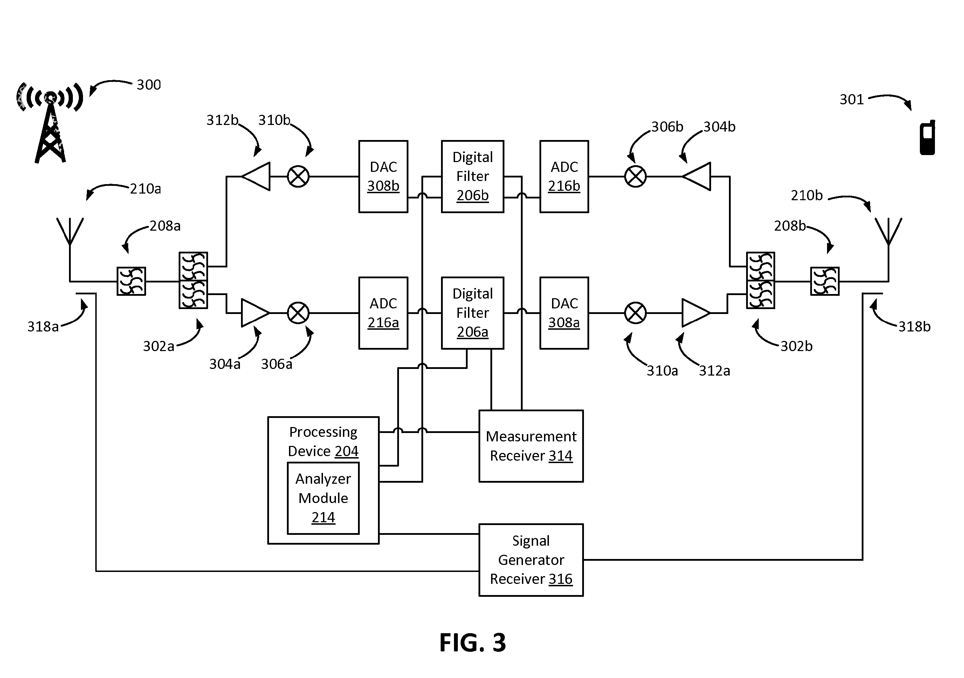

FIG. 3 is a schematic diagram of an example of a repeater 200 configured to perform digital post-distortion compensation according to one aspect. On the donor side, the repeater 200 can receive downlink signals from and transmit uplink signals to a base station 300 via the antenna 210a. On the coverage side, the repeater 200 can receive uplink signals from and transmit downlink signals to one or more terminal devices 301 via the antenna 210b. The terminal devices 301 include electronic devices used to communicate voice or data via a telecommunications system, such as (but not limited to) a cellular network. Non-limiting examples of terminal devices 301 include mobile stations, mobile devices, access terminals, subscriber stations, mobile terminals, remote stations, user terminals, subscriber units, cellular phones, smart phones, personal digital assistants ("PDAs"), laptop computers, netbooks, e-readers, wireless modems, etc.

A downlink path between duplexers 302a, 302b of the repeater 200 can include a low noise amplifier 304a, a mixer 306a, the analog-to-digital converter 216a, the digital filter 206a, a digital-to-analog converter 308a, a mixer 310a, and a power amplifier 312a. In some aspects, the duplexer 302a can split or otherwise separate downlink RF signals received on the donor side from the base station 300 from uplink signals. For a frequency duplexed system, splitting or otherwise separating the RF signals can allow downlink signals and uplink signals to be filtered and amplified separately. In other aspects, the duplexer 302a can be replaced by one or more switches. For example, a time division duplex system can use one or more switches rather than the duplexer 302a. The low noise amplifier 304a can amplify downlink signals received from the duplexer 302a. The mixer 306a can down-convert the downlink signals to an intermediate frequency for processing by the digital filter 206a. In additional or alternative aspects, additional amplifiers, filters, variable attenuators or other components and devices can be included to modify a received downlink signal to a range of the analog-to-digital converter 216a in the downlink direction.

Digital data can be converted to the analog domain by a digital-to-analog converter 308a in a downlink direction. A frequency up-mixer 310a can up-convert signals to a specified RF frequency in a downlink direction. A power amplifier 312a can increase signal power to a specified RF power level in a downlink direction.

An uplink path from the duplexer 302b to the duplexer 302a, of the repeater 200 can include a low noise amplifier 304b, a mixer 306b, the analog-to-digital converter 216b, the digital filter 206b, a digital-to-analog converter 308b, a mixer 310b, and a power amplifier 312b. In some aspects, the duplexer 302b can split or otherwise separate uplink RF signals received on the coverage side from one or more terminal devices 301 from downlink signals. In other aspects, the duplexer 302b can be replaced by one or more switches. For example, a time division duplex system can use one or more switches rather than the duplexer 302b. The low noise amplifier 304b can amplify uplink signals received from the duplexer 302b. The mixer 306b can down-convert the uplink signals to an intermediate frequency for processing by the digital filter 206b. In additional or alternative aspects, additional amplifiers, filters, variable attenuators or other components and devices can be included to modify a received uplink signal to a range of the analog-to-digital converter 216b in the uplink direction.

Digital data can be converted to the analog domain by a digital-to-analog converter 308b in an uplink direction. Conversion to the analog domain can be implemented after post-filtering/compensation or pre-filtering/distortion. A frequency up-mixer 310b can up-convert signals to a specified RF frequency in an uplink direction. A power amplifier 312b can increase signal power to a specified RF power level in an uplink direction.

In some aspects, the analyzer module 214 can determine coefficients or other characteristics for one or more of the digital filters 206a, 206b based on measurements by the repeater 200. The repeater 200 can include a measurement receiver 314. The measurement receiver 314 can determine one or more portions of a frequency spectrum of received signals for which distortion compensation can be performed. In additional or alternative aspects, coefficients or other characteristics for one or more of the digital filters 206a, 206b can either be uploaded to the processing device 204 via a suitable interface. To upload the coefficients or other characteristics, one or more of the filter coefficients or the transmission characteristic of the distorting filter can be provided.

The repeater 200 can also include a test signal generator 316 for providing signal used to perform distortion measurements. The test signal generator 316 can be coupled to the donor side via a directional coupler 318a and to the coverage side a directional coupler 318b. The test signal generator 316 can inject one or more test signals on the donor side or the coverage side. In some aspects, a pilot tone or other test signal can be a continuous wave signal swept over a frequency range of interest. In other aspects, a pilot tone or other test signal can be a spread spectrum sequence underlying a communication signal. In additional or alternative aspects, a communication-signal specific to a pilot sequence may be used. The power level of a pilot tone or other test signal transmitted can be below a specified signal level for spurious emissions. In some aspects, one or both of the transmit modes of the transport sections 202a, 202b can be deactivated to perform a distortion measurement process. Deactivating a transmit mode can avoid radiation of signals into licensed bands.

In some aspects, the data describing filter coefficients or the transmission characteristic of the distorting filter can be static. In other aspects, the data describing filter coefficients or the transmission characteristic of the distorting filter can include component or temperature-specific information. Temperature information can be used for adjusting the digital filter coefficients to the temperature dependent transmission characteristic of one or more of the analog filters 108a, 208a, 208b.

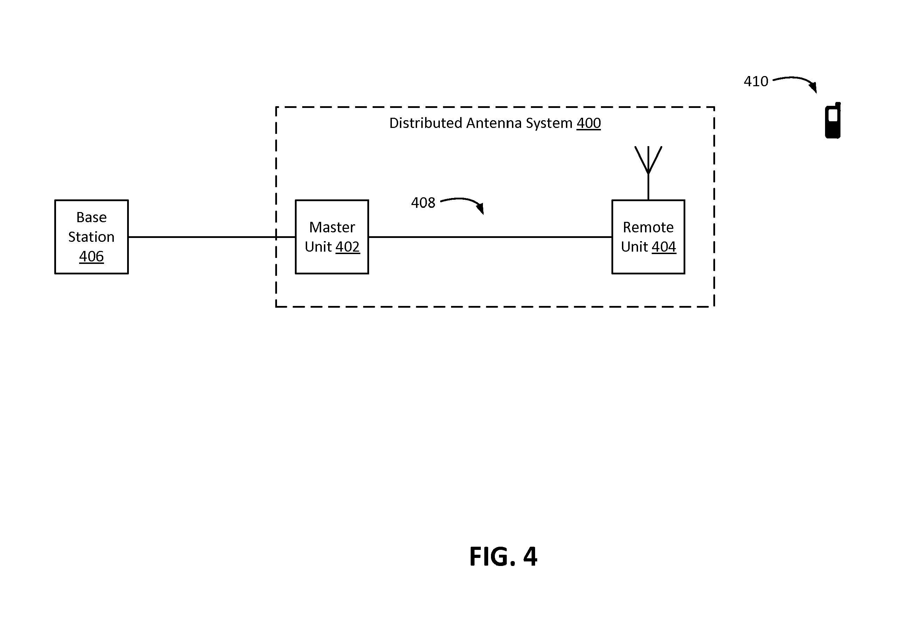

In additional or alternative aspects, a telecommunication device 100 for performing digital distortion compensation can include one or more devices of a distributed antenna system. For example, FIG. 4 is a block diagram of an example of a distributed antenna system 400 according to one aspect. The distributed antenna system 400 can include a master unit 402 and one or more remote units 404.

In a downlink direction, downlink signals can be transmitted from one or more base stations 406 to one or more master units 402. The master unit 402 can adjust the gain of the downlink signal, filter the downlink signal, and convert the downlink signal from an analog format to a digital format. The digitized signal can be split or otherwise separated and be distributed to one or more remote units 404.

A remote unit 404 can receive downlink signals from the master unit 402. The remote unit 404 can transmit the downlink signals to one or more terminal devices 410. In some aspects, multiple remote units 404 can be configured in a parallel configuration. In additional or alternative aspects, multiple remote units 404 can be configured in a daisy chain configuration.

In an uplink direction, uplink signals can be transmitted from one or more terminal devices 410 to one or more remote units 404. A remote unit 404 can adjust the gain of the uplink signal, filter the uplink signal, and convert the downlink signal from an analog format to a digital format. The digitized signal can transmitted to one or more master units 402. A master unit 402 can receive uplink signals from one or more remote units 404. The master unit 402 can transmit the uplink signals to one or more base stations 406.

Any suitable communication medium 408 can be used for communicating signals between the master unit 402 and the remote unit(s) 404. In some aspects, the communication medium 408 can be a fiber optical transport medium. In other aspects, the communication medium 408 can be a coaxial cable or twisted pair cable. In some aspects, uplink signals and downlink signals may be duplexed to one communication medium 408. In other aspects, uplink signals and downlink signals may be respectively communicated via separate uplink and separate communication media.

Although FIG. 4 depicts a single master unit 402, a single remote unit 404, a single base station 506, and a single terminal device 410 for illustrative purposes, any number of master units, remote units, base stations, or terminal devices can be used.

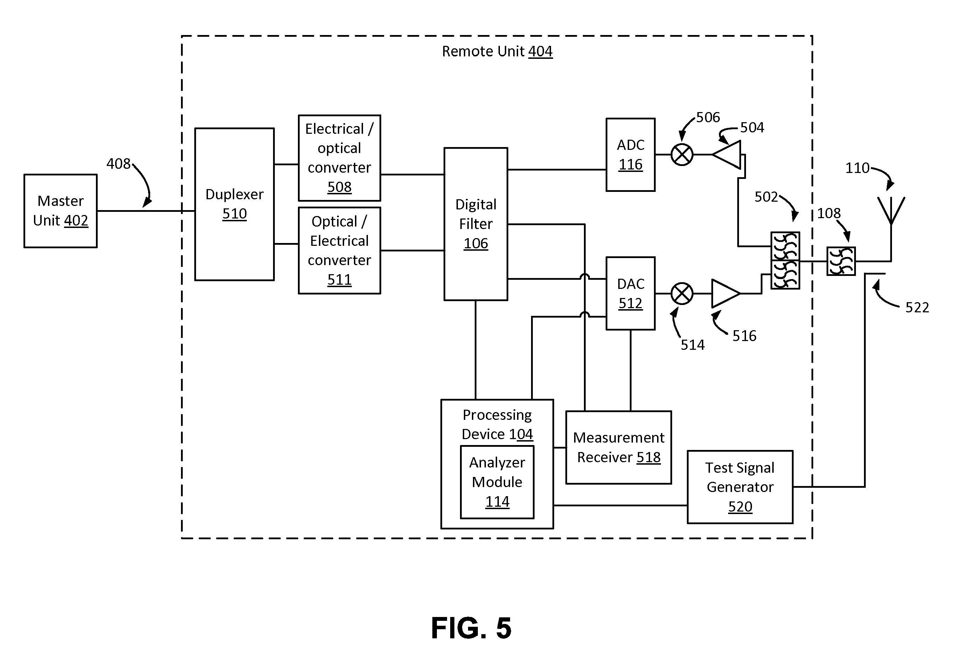

FIG. 5 is a schematic diagram of a remote unit 404 of a distributed antenna system that is configured to perform digital post-distortion compensation to according to one aspect. The remote unit 404 can include the filter 108, the antenna 110, a duplexer 502, a low-noise amplifier 504, a frequency down mixer 506, the analog-to-digital converter 116, an electrical-to-optical converter 508, a wavelength division duplexer 510, an optical-to-electrical converter 511, a digital-to-analog converter 512, a frequency up mixer 514, and a power amplifier 516. The duplexer 502, a low-noise amplifier 504, a frequency down mixer 506, the analog-to-digital converter 116 can perform similar functions as the corresponding components of the repeater 200 depicted in FIG. 3. The electrical-to-optical converter 508 can convert electrical signals outputted from the digital filter 108 to optical signals for transmission to the master unit 402. The wavelength division duplexer 510 can isolate uplink signals transmitted to the master unit 402 from downlink signals received from the master unit 402. The optical-to-electrical converter 511 can convert optical downlink signals received from the master unit 402 to electrical downlink signals.

In some aspects, the duplexer 502 can perform one or more functions of the digital filter 108 described above with respect to FIG. 1. The filter 108 can be omitted.

In some aspects, the analyzer module 114 can determine coefficients or other characteristics for the digital filter 106 based on measurements by a measurement receiver 518. The measurement receiver 518 can determine one or more portions of a frequency spectrum of uplink signals for which distortion compensation can be performed. In additional or alternative aspects, coefficients or other characteristics for the digital filter 106 can either be uploaded to the processing device 104 via a suitable interface. To upload the coefficients or other characteristics, one or more of the filter coefficients or the transmission characteristic of the distorting filter can be provided.

The remote unit 404 can also include a test signal generator 520 for providing signal used to perform distortion measurements. The test signal generator 520 can be coupled to the uplink path via a directional coupler 522. The test signal generator 520 can inject one or more test signals on the donor side or the coverage side. In some aspects, a pilot tone or other test signal can be a continuous wave signal swept over a frequency range of interest. In other aspects, a pilot tone or other test signal can be a spread spectrum sequence underlying a communication signal. In additional or alternative aspects, a communication-signal specific to a pilot sequence may be used. The power level of a pilot tone or other test signal transmitted can be below a specified signal level for spurious emissions. In some aspects, one or both of the transmit modes of the remote unit 404 can be deactivated to perform a distortion measurement process. Deactivating a transmit mode can avoid radiation of signals into licensed bands.

Although FIGs. 1-3 and 5 respectively depict dedicated band-selective filters or carrier-selective filters 108, 208a, 208b communicatively coupled to respective digital filters 106, 206a, 206b for performing distortion compensation, other implementations are possible. For example, in some aspects, distortion compensation may be implemented in a band-selective filter or a carrier-selective filter. Compensation for amplitude distortion may also be implemented in a band-selective filter or carrier-selective filter. Additional distortion compensation may introduce additional delay. In some aspects, carrier selective filtering may be used to compensate for severe distortion in a particular frequency channel. In other aspects, carrier selective filtering may be omitted, such as for narrow-band or carriers with little distortion. In additional or alternative aspects, one or more the filters 108, 208a, 208b can be integrated with one or more of the duplexers 302a, 302b, 502 by configuring one or more of the duplexers 302a, 302b, 502 to perform one or more functions of one or more the filters 108, 208a, 208b.

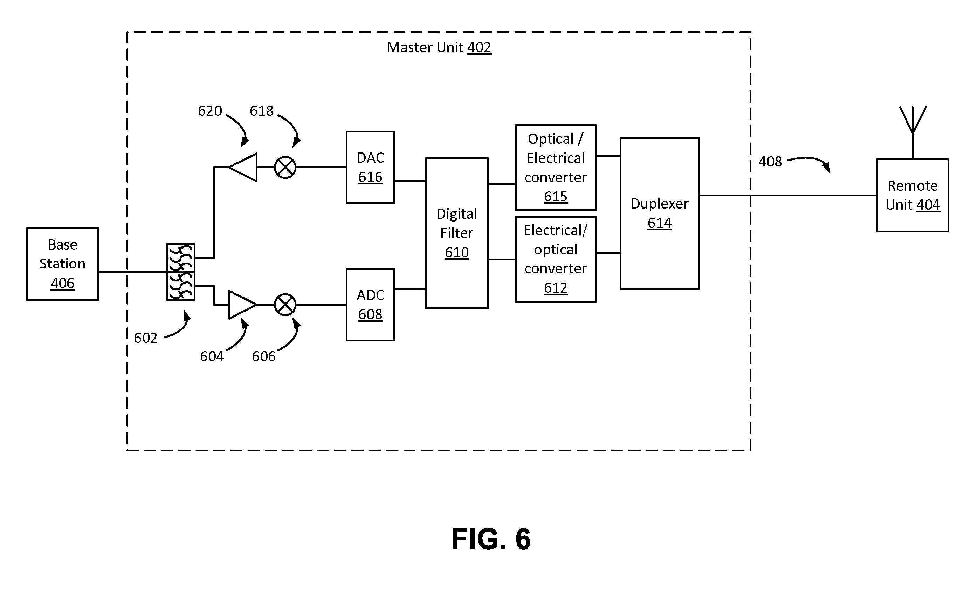

FIG. 6 is a schematic diagram of a master unit 402 configured to communicate signals between one or more base stations 406 and one or more remote units 404 depicted in FIG. 5. The master unit 402 can also include a duplexer 602, a low-noise amplifier 604, a frequency down mixer 606, an analog-to-digital converter 608, an electrical-to-optical converter 612, a wavelength division duplexer 614, an optical-to-electrical converter 615, a digital-to-analog converter 616, a frequency up-mixer 618, and a power amplifier 620. The duplexer 602, a low-noise amplifier 604, a frequency down mixer 606, and the analog-to-digital converter 608 can perform similar functions as the corresponding components of the repeater 200 depicted in FIG. 3. The electrical-to-optical converter 612 can convert downlink electrical signals to downlink optical signals for transmission to the remote unit 404. The wavelength division duplexer 614 can isolate uplink signals received by the master unit 402 from downlink signals transmitted by the master unit 402. The optical-to-electrical converter 615 can convert optical uplink signals received from the remote unit 404 to electrical uplink signals.

The master unit 402 can compensate for filter distortion introduced by an uplink interference notch using the digital filter 610. An un-coordinated narrow-band signal (such as, but not limited to, essential services terminal devices) can degrade the performance in an adjacent broadband channel. The distortion caused by the notch filter may be corrected in each digital remote filter unit individually. For component and temperature specific distortions of a sufficiently small amount, the distortion correction can take place compositely in the digital filter of the master unit 402.

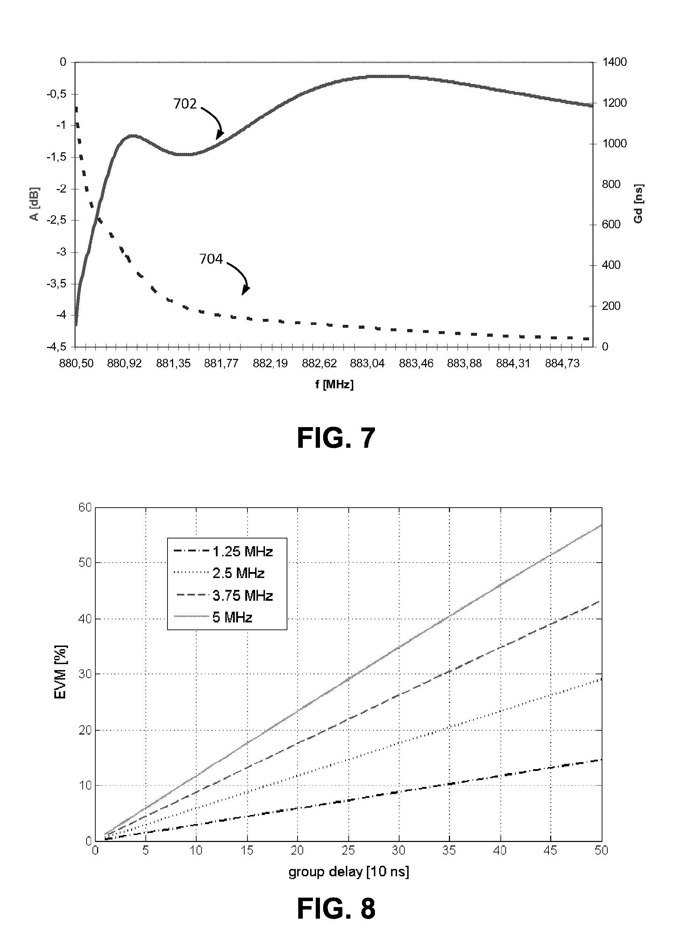

FIG. 7 is a graph of examples of an amplitude response 702 and a group delay distortion 704 introduced by a steep notch filter such as one or more of the filters 108, 208a, 208b. A transition band of one or more notch filters 108, 208a, 208b can be made as narrow as possible for RF attenuation to avoid or prevent attenuating the passband and to provide sufficient attenuation in the stopband. The amplitude response 702 of one or more notch filters 108, 208a, 208b can be related to a phase response of one or more notch filters 108, 208a, 208b. A non-linear phase response can cause a variation in the group delay 704 variation that can degrade performance to a greater extent than the ripple in the amplitude response. For example, FIG. 7 depicts a group delay of 400 nanoseconds from 881-885 MHz degrading the amplitude response, as reflected by the changes in amplitude of ±0.5 dB for frequencies between 881 MHz and 885 MHz.

FIG. 8 is a graph of an example relationship between the error vector magnitude ("EVM") and group delay. The graph depicts EVM examples 802, 804, 806, 808. The quality of a broadband signal can be represented by the EVM of the broadband signal. The EVM can be degraded by group delay variation. The impact of the group delay on the EVM can be affected by the channel frequency bandwidth ("ChBw") of a communication signal. For example, an EVM below 8% can be obtained by reducing the group delay variation of a 3.84 MHz (e.g., UMTS) carrier to less than 70 nanoseconds.

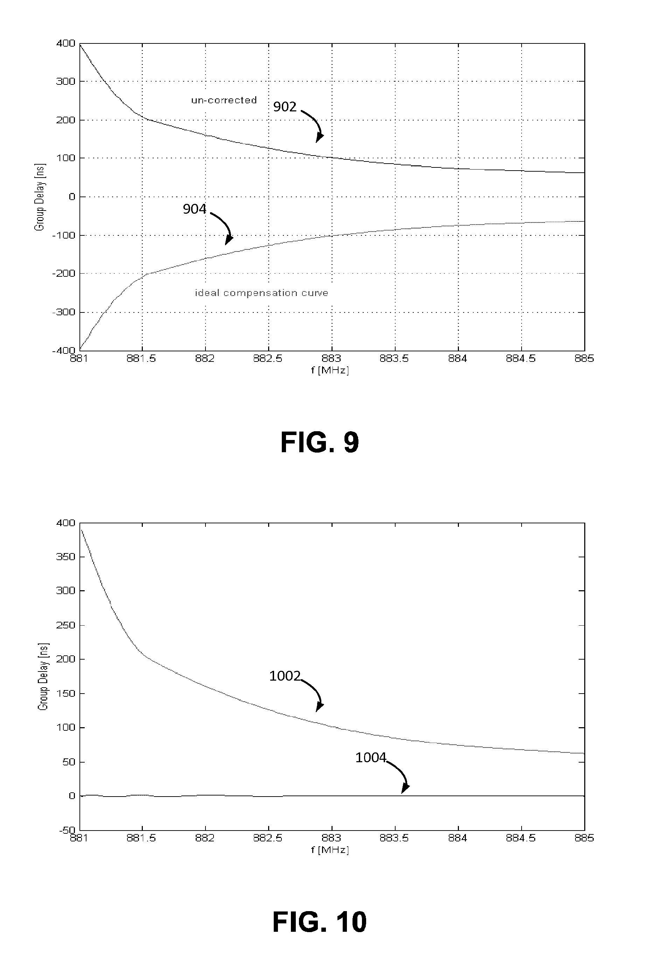

An analog RF filter may increase the group delay when the frequency is decreasing. Group delay variation can be compensated in a digital section of the repeater by passing the signal through a filter with an inverse group delay response. FIG. 9 is a graph comparing an example of an un-corrected group delay 902 and an ideal compensation group delay 904.

FIG. 10 is graph comparing examples of an un-corrected group delay and group delay compensated using an all-pass filter. An ideal group delay ripple compensation curve can be approximated by a phase progression all-pass-filter in the digital domain. FIG. 10 graphically depicts the results of applying a simple 8-pole compensation filter. A group delay variation of 350 nanoseconds can be corrected to less than ±2 nanoseconds over a complete signal frequency bandwidth.

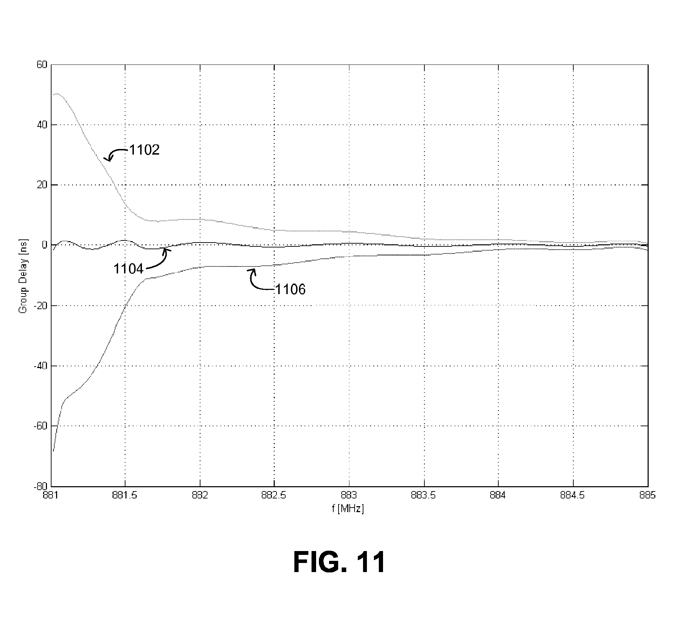

FIG. 11 is a graph of an example of an expected compensation temperature behavior. FIG. 11 graphically depicts a group delay 1102 for a low temperature, a group delay 1104 for a nominal temperature, and a group delay 1106 for a high temperature. The group delays 1102, 1104, 1106 can be obtained using filter parameters measured at 25°C over a temperature range of -30°C to 70°C. In some aspects, digital implementations may not show temperature dependency, in contrast to analog filters. In other aspects, digital implementations may include one or more devices to compensate for temperature dependency. FIG. 11 depicts results using a drift of -100 kHz (high temperature) up to +100 kHz (low temperature) of a typical air cavity filter. The results depicted in FIG. 11 show that an adjacent frequency range (e.g., from 881-885 MHz) can be utilized by a broadband signal (e.g., a UMTS carrier). A static, low order, digital all-pass filter can be implemented to compensate the group delay variation over temperatures of -30°C to 70°C. Broadband signal quality degradation can thereby be limited to an acceptable value (e.g., EVM increase less than 5%).

The foregoing description of aspects and features, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of this invention. Aspects and features from each example disclosed can be combined with any other example. The illustrative examples described above are given to introduce the reader to the general subject matter discussed here and are not intended to limit the scope of the disclosed concepts.

## Claims

1. A system comprising:
a transport section that includes an analog filter configured to reduce interference from interfering signals having frequencies in frequency bands adjacent to received signals from an antenna by filtering the received signals;
a digital filter in a signal path with the analog filter; and
a processing device communicatively coupled to the digital filter, the processing device configured to modify a plurality of filter coefficients of the digital filter,
wherein the digital filter with the plurality of modified filter coefficients is configured to compensate for distortion in the received signals caused by the analog filter.

2. The system of claim 1, wherein the processing device is configured to execute an analyzer module stored in a memory device, wherein the analyzer module is configured to determine the distortion by analyzing a test signal or a test sequence based on at least one of transmission coefficients for the receive signals, amplitudes for the received signals, and phases of the signals received signals.

3. The system of claim 2, further comprising a test signal generator communicatively coupled to the signal path at a point prior to the analog filter and configured to provide the test signal or the test sequence to the signal path.

4. The system of claim 3, wherein the processing device is configured to disable the transport section prior to providing the test signal.

5. The system of claim 1, further comprising a measurement receiver configured for identifying at least one portion of a frequency band for the received signal in which distortion is caused by the analog filter.

6. The system of claim 1, further comprising at least one donor antenna configured to communicate with at least one base station and at least one coverage antenna configured to communicate with at least one terminal device, wherein the signal path comprises the analog filter coupled to at least one of the donor antenna and the coverage antenna.

7. The system of claim 1, further comprising:
at least one remote unit configured to communicate with at least one terminal device, the at least one remote unit comprising the analog filter, the digital filter, and the processing device; and
at least one master unit communicatively coupled to the at least one remote unit and configured to communicate with at least one base station.

8. A method comprising:
receiving signals via at least one antenna of a transport section;
filtering the received signals with an analog filter to reduce interference from interfering signals having frequencies in frequency bands adjacent to the received signals;
modifying, by a processing device, a plurality of filter coefficients of a digital filter in a signal path with the analog filter; and
compensating, by the digital filter, the received signals for distortion in the signal path caused by the analog filter.

9. The method of claim 8, further comprising determining the distortion by analyzing a test signal or a test sequence based on at least one of transmission coefficients for the receive signals, amplitudes for the received signals, and phases of the signals received signals.

10. The method of claim 9, further comprising providing, by a test signal generator, the test signal or the test sequence to the signal path.

11. The method of claim 10, further comprising disabling the transport section prior to providing the test signal.

12. The method of claim 8, further comprising identifying, by a measurement receiver, at least one portion of a frequency band for the received signal in which distortion is caused by the analog filter.

13. The method of claim 8, wherein the signal path comprises the analog filter coupled to at least one of a donor antenna or a coverage antenna of a repeater.

14. The method of claim 8, wherein the signal path comprises a remote unit of a distributed antenna system that includes the analog filter, the digital filter, and the processing device.

15. A distributed antenna system comprising:
at least one master unit configured to communicate uplink signals to at least one base station; and
at least one remote unit configured to communicate the uplink signals received from at least one terminal device to the at least one master unit, the remote unit comprising:
a transport section that includes an analog filter configured to reduce interference from interfering signals having frequencies in frequency bands adjacent to the uplink signals;
a digital filter in an uplink signal path with the analog filter; and
a processing device communicatively coupled to the digital filter, the processing device configured to modify a plurality of filter coefficients of the digital filter,
wherein the digital filter with the plurality of modified filter coefficients is configured to compensate for distortion in the uplink signals caused by the analog filter.
